# FASCICULE DE BREVET EUROPEEN

(11) **EP 2 978 657 B1**
(45) Date de publication et mention de la délivrance du brevet: **19.07.2017**
(21) Numéro de dépôt: 14711809.5
(22) Date de dépôt: 18.02.2014
(51) Int. Cl.: B62D 21/15, B62D 25/04, B62D 25/16

(54) **ELEMENT DE RENFORT LATERAL DE L'AVANT D'UN COTE DE CAISSE DE VEHICULE AUTOMOBILE**
SEITENVERSTÄRKUNGSELEMENT FÜR DIE FRONTPARTIE EINER SEITE DER VERKLEIDUNG EINES KRAFTFAHRZEUGS
SIDE REINFORCING ELEMENT FOR THE FRONT OF A SIDE OF THE SHELL OF A MOTOR VEHICLE

(30) Priorité: 26.03.2013 FR 1352702
(43) Date de publication de la demande: 03.02.2016
(73) Titulaire: Peugeot Citroën Automobiles SA, 78140 Vélizy Villacoublay (FR)
(72) Inventeur: NORREEL, Franck, F-90120 Mezire (FR)
(86) Numéro de dépôt international: PCT/FR2014/050337
(87) Numéro de publication internationale: WO 2014/154962

(56) Documents cités:
- EP-A2- 2 080 689
- FR-A1- 2 926 280
- FR-A1- 2 934 233

## Description

La présente invention est relative aux éléments de renfort latéral de l'avant d'un côté de caisse de véhicule automobile. Le document EP 2 080 689 A2 décrit un élément de renfort selon le préambule de la revendication 1.

Plus particulièrement, l'invention concerne un tel élément destiné à être fixé latéralement à l'avant de la caisse et destiné à s'étendre selon la direction longitudinale (L) du véhicule depuis l'avant d'une doublure d'aile avant (30) de la caisse vers un pied avant (14) de la caisse.

Ce genre d'éléments de renfort latéral de l'avant d'une caisse de véhicule automobile est connu du document FR2934233 qui décrit un tel élément à trois branches arrière. Cet élément peut donner satisfaction, mais il est relativement complexe.

La présente invention a notamment pour but de proposer une alternative aux solutions de l'art antérieur, en particulier celle décrite dans le document FR2934233.

A cet effet, élément de renfort latéral de l'avant d'un côté de caisse de véhicule automobile, destiné à être fixé latéralement à l'avant de la caisse et destiné à s'étendre selon la direction longitudinale du véhicule depuis l'avant d'une doublure d'aile avant de la caisse vers un pied avant de la caisse. L'élément de renfort latéral comprend un tronçon avant déformable au moins longitudinalement, un tronçon médian prolongeant vers l'arrière le tronçon avant, un tronçon arrière de renfort de pied qui prolonge vers l'arrière le tronçon médian et un tronçon d'extrémité arrière de renfort de montant de baie qui s'étend incliné vers le haut et vers l'arrière à partir du haut dudit tronçon arrière. Le tronçon avant et le tronçon médian sont conformés pour recouvrir latéralement la doublure d'aile avant appartenant au côté de caisse du véhicule en autorisant la déformation du tronçon avant par compression suite à un choc frontal du véhicule ou un choc de trois-quarts face. Le tronçon arrière 47 de renfort de pied est conformé pour recouvrir latéralement le pied avant de la caisse. Le tronçon d'extrémité arrière de renfort de montant de baie est conformé pour recouvrir latéralement la base d'un montant de baie de pare-brise de la caisse. Le haut du tronçon arrière comprend un flanc supérieur qui s'étend transversalement et comprend, en avant par rapport au tronçon d'extrémité arrière de renfort de montant de baie, une extension transversale de renfort de traverse inférieure de baie de pare-brise.

Dans divers modes de réalisation de l'élément de renfort latéral selon l'invention, on peut éventuellement avoir recours en outre à l'une et/ou à l'autre des dispositions suivantes :
- le tronçon avant est déformable verticalement, en plus d'être déformable longitudinalement ;
- au tronçon médian et au tronçon arrière de renfort de pied, l'élément de renfort a une limite inférieure qui est sensiblement horizontale, cette limite inférieure étant telle que le tronçon arrière de renfort de pied soit adapté à être au moins en correspondance du tiers supérieur du pied avant du côté de caisse ;
- à sa moitié inférieure, le tronçon arrière de renfort de pied a une zone de fixation de charnon fixe d'articulation de porte pour coopérer par fixation avec un charnon fixe de pivotement de porte latérale avant du véhicule ;
- le tronçon arrière de renfort de pied comprend un poteau latéral déterminant un élargissement latéral de l'élément de renfort, ce poteau étant prévu pour être en correspondance du haut du pied avant du côté de caisse ;
- à sa moitié supérieure et à son extrémité arrière, le tronçon arrière de renfort de pied comprend un flasque arrière qui est raccordé au bas du tronçon d'extrémité arrière de renfort de montant de baie, ce flasque arrière étant prévu pour être en correspondance d'une feuillure longitudinale du pied avant du côté de caisse à la base du montant de baie ;
- l'avant du tronçon médian est déformable longitudinalement.

Par ailleurs, l'invention a également pour objet une caisse de véhicule automobile comprenant :
- un côté de caisse pourvu d'une doublure d'aile avant, pourvu d'un pied avant dont une face arrière détermine l'avant d'un encadrement de porte latérale avant et pourvu d'un montant de baie de pare-brise raccordé au haut dudit pied,
- un élément de renfort avant qui est fixé latéralement à l'avant du côté de caisse et qui s'étend selon la direction longitudinale du véhicule depuis l'avant de la doublure d'aile avant vers le pied avant de la caisse.

Cette caisse est caractérisée en ce que l'élément de renfort avant est conforme à l'invention en ayant :
- son tronçon avant et son tronçon médian qui recouvrent latéralement la doublure d'aile avant appartenant au côté de caisse en autorisant la déformation du tronçon avant par compression suite à un choc frontal du véhicule ou un choc de trois-quarts face,
- son tronçon arrière de renfort de pied qui recouvre latéralement le pied avant de la caisse et
- son tronçon d'extrémité arrière de renfort de montant de baie qui recouvre latéralement la base du montant de baie de pare-brise.

Dans un mode de réalisation de la caisse, le tronçon d'extrémité arrière de renfort de montant de baie recouvre la base du montant de baie sur sensiblement un quart à un tiers de l'étendue de ce montant.

Dans une telle caisse comprenant une porte latérale avant pourvue d'une barre de renfort de frise, cette caisse peut être est caractérisée en ce que le tronçon arrière de renfort de pied l'arrière a une moitié inférieure d'un flanc transversal arrière qui est en regard d'une extrémité avant de la barre de renfort de frise, pour le cas échéant y transmettre des efforts à absorption d'énergie en cas de choc frontal ou de choc de trois-quarts face.

Dans un mode de réalisation de la caisse selon l'invention quand elle comprend une traverse inférieure de baie de pare-brise, cette caisse ayant son élément de renfort latéral tel que le haut du tronçon arrière est pourvu de son extension transversale de renfort de traverse inférieure de baie de pare-brise, cette caisse peut être caractérisée en ce que l'extension transversale de renfort de traverse inférieure de baie de pare-brise est en correspondance d'une extrémité latérale la traverse inférieure de baie de pare-brise.

Par ailleurs, l'invention a également pour objet un véhicule automobile comportant une caisse déterminant un habitacle en étant pourvue de deux côtés de caisse déterminant au moins des encadrements de porte latérale avant, des montants de baie de pare-brise étant aussi dans les encadrements de porte, caractérisé en ce que la caisse est conforme à l'invention de manière à rigidifier les encadrements de porte avant pour qu'ils tendent à conserver leur géométrie en bas de montant de baie de pare-brise en cas de choc frontal du véhicule ou de choc de trois-quarts face, la géométrie de l'habitacle tendant alors à être conservée lors de ce choc.

D'autres buts, caractéristiques et avantages de l'invention apparaîtront au cours de la description suivante d'un de ses modes de réalisation, donné à titre d'exemple non limitatif, en regard des dessins joints dans lesquels :
- la figure 1 est une vue en perspective représentant partiellement un côté de l'avant d'une caisse de véhicule automobile selon l'invention, avec une partie de barre de renfort de frise de porte avant ;
- la figure 2 est une vue de côté de l'avant de la caisse du véhicule automobile de la figure 1, avec sa partie de barre de renfort frise de porte avant.

Sur les différentes figures, les mêmes références désignent des éléments identiques ou similaires. Dans la description qui va suivre, la direction désignée L est la direction longitudinale correspondant à l'axe d'avancement d'un véhicule, cet axe étant orienté de l'avant vers l'arrière du véhicule, la direction désignée T est transversale, la direction désignée V est verticale.

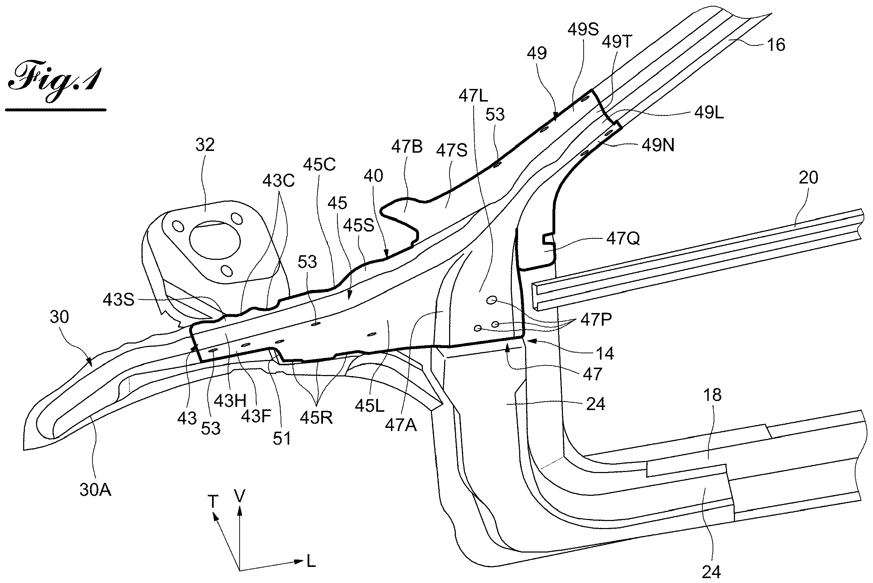

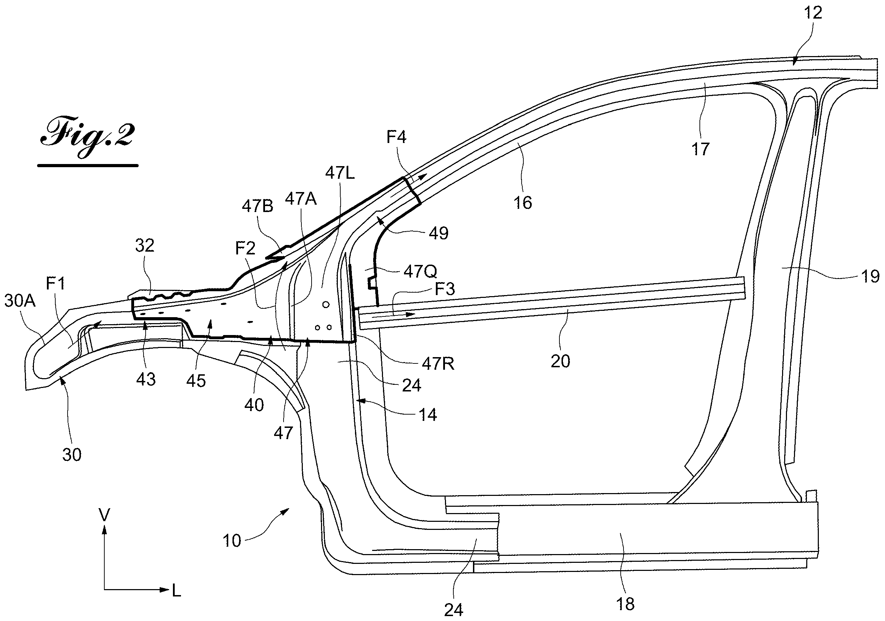

La caisse 10 d'un véhicule comporte traditionnellement une grande tôle latérale de structure appelée côté de caisse ou côté d'habitacle 12 qui détermine un encadrement de porte avant. L'encadrement est délimité par un pied avant 14 (figure 1 et figure 2), un montrant de baie 16 prolongé horizontalement vers l'arrière par un brancard 17 (figure 2) et un longeron de soubassement 18 raccordé à mi longueur du véhicule à un pied milieu 19 (figure 2) s'étendant vers le haut en rejoignant ledit brancard 17. Les montants 16 de baie de pare-brise servent tant dans l'encadrement de pare-brise que dans les encadrements de porte latérale avant dans le véhicule. Un renfort de pied avant 24 est situé sur la moitié inférieure du pied avant 14 et au raccordement de ce pied avec le longeron 18 de soubassement.

Une porte avant est montée dans l'encadrement en ayant au moins une charnière (non représentée) transversalement interposée entre le pied avant 14 et une partie avant de la porte. Pour des raisons de clarté des dessins, seule la barre 20 de renfort de frise est représentée dans la porte avant, la frise de porte délimitant inférieurement une fenêtre de la porte avant.

Dans le mode de réalisation de la caisse 10 représenté sur les figures, l'avant du côté de caisse 12 comprend une doublure d'aile avant 30 s'étendant tant latéralement à l'habitacle du véhicule qu'au compartiment moteur de ce dernier. L'avant 30A de la doublure d'aile avant 30 est, d'avant en arrière, incliné transversalement de l'extérieur vers l'intérieur et incliné longitudinalement de bas en haut, par exemple avec une inclinaison d'une dizaine ou une vingtaine de degrés. Une partie arrière de la doublure d'aile avant 30 est raccordée au pied avant 14 et soudée au renfort de pied avant 24. Au moins une moitié avant de la doublure d'aile avant 30, dont un tronçon médian est latéralement à proximité d'une coupelle supérieure 32 d'ancrage d'amortisseur, présente globalement une section transversale en oméga.

L'avant de la caisse 10 comporte, du côté de l'extérieur du véhicule, un élément de renfort latéral avant 40 soudé sur le côté de caisse 12, d'une part au haut du pied avant 14 et d'autre part à la doublure d'aile avant 30 mais aussi à la base du montant de baie 16. L'élément de renfort latéral avant 40 est susceptible, avec la doublure d'aile avant 30, se déformer longitudinalement par compression en se pliant longitudinalement suite à un choc frontal du véhicule.

Le renfort latéral avant 40 recouvre la doublure d'aile avant 30 sur une grande moitié arrière de cette doublure. Le renfort latéral avant 40 recouvre la base du montant de baie 16 sur sensiblement un quart à un tiers de l'étendue de ce montant.

L'élément de renfort latéral avant 40 comporte un contour général schématiquement triangulaire. Une première pointe du triangle est vers l'avant, un angle sensiblement droit du triangle est en correspondance de l'extrémité inférieure arrière du renfort 40 et enfin une deuxième pointe du triangle est en correspondance de l'extrémité supérieure arrière dudit renfort. L'élément de renfort latéral avant 40 peut aussi être appelé gousset.

L'élément de renfort latéral avant 40 s'étend globalement dans la direction longitudinale L du véhicule depuis une moitié avant de la doublure d'aile avant 30 vers d'une part le pied avant 14 et d'autre part le montant de baie 16. L'extrémité avant du renfort 40 est située sensiblement au regard d'une zone de la doublure d'aile 30 s'étendant entre une ligne verticale médiane de ladite doublure et une ligne vertical placée au tiers avant de la longueur de la doublure. L'élément de renfort latéral avant 40 comprend essentiellement un tronçon avant 43, un tronçon médian 45 prolongeant le tronçon avant 43, un tronçon arrière 47 de renfort de pied et un tronçon d'extrémité arrière 49 de renfort de montant de baie.

Le tronçon avant 43 est déformable en présentant d'une part une hauteur inférieure au reste de l'élément de renfort latéral avant et d'autre part des creux 43C réduisant localement sa section verticale. Le tronçon avant 43 comprend un pan supérieur 43S qui est vertical et un pan inférieur 43F qui est vertical, ces pans verticaux étant raccordés entre eux par un pan horizontal 43H. Ces trois pans sont accolés à des faces correspondantes de la doublure d'aile avant 30 constituant le côté d'habitacle 12 à renforcer. Les creux 43C créent localement des ondulations dans l'arrête supérieure du pan supérieur 43S en favorisant la détermination de zones de pliage longitudinal de l'élément de renfort 40 avec le pliage longitudinal de de la doublure d'aile avant 30 lors d'un choc de type frontal ou de type de trois-quarts face.

Ces trois pans se prolongent vers l'arrière par le tronçon médian 45 prolongeant le tronçon avant 43. L'arrête inférieure du pan inférieur 43F se raccorde à un décrochement sensiblement vertical 51 qui permet à l'élément de renfort 40 de s'élargir vers le bas. L'arrête inférieure déterminant la limite horizontale inférieure de l'élément de renfort est sensiblement horizontale au tronçon médian 45, et au tronçon arrière 47 de renfort de pied. Localement, cette limite inférieure est crénelée sur la moitié avant du tronçon médian 45, les créneaux pouvant être en variante des ondulations à pentes plus ou moins marquées. Les créneaux correspondants 45R favorisent la détermination de zones de pliage longitudinal de l'élément de renfort 40 lors d'un choc de type frontal ou de type de trois-quarts face. Le créneau rentrant qui est le plus en arrière est verticalement en regard d'un creux 45C aménagé dans le pan supérieur 45S du tronçon médian. L'élément de renfort 40 a son flanc latéral principal 45L de tronçon médian 45 qui prolonge vers l'arrière le pan inférieur 43F du tronçon avant 43. Le flanc vertical inférieur 45L va s'élargissant vers le haut en suivant une courbure ascendante qui correspond à celle de l'arrière de l'aile et à celle du côté de caisse à proximité du pied avant.

Le tronçon arrière 47 de renfort de pied comprend un poteau latéral ayant une paroi transversale avant 47A (figure 1) permettant un élargissement latéral de l'élément de renfort 40 en correspondance du haut du pied avant 14 du côté de caisse 12, par exemple le tiers supérieur du pied avant. Le poteau du tronçon arrière 47 de renfort de pied comprend un flanc latéral 47L qui s'étend verticalement et longitudinalement en correspondance de la face latérale du haut du pied avant. Le poteau du tronçon arrière 47 de renfort de pied comprend aussi un flanc transversal arrière 47R (figure 2) qui s'étend verticalement et transversalement en correspondance du haut du pied avant. La limite inférieure dudit poteau est sensiblement horizontale, dans l'alignement de la limite inférieure du tronçon médian 45. Le tronçon arrière 47 de renfort de pied comprend enfin un flasque arrière 47Q qui est raccordé longitudinalement à l'arrière de la moitié supérieure du poteau, en correspondance d'une feuillure longitudinale du côté de caisse à la base du montant de baie.

La moitié inférieure du flanc latéral 47L comprend une zone de fixation de charnon fixe d'articulation de la porte avant, incluant des perçages 47P de passage de vis de fixation de ce charnon. Le flanc supérieur 47S du tronçon arrière 47 s'étend transversalement et comprend, en correspondance du bas de pare-brise, une extension transversale 47B de renfort de traverse inférieure de baie de pare-brise. Cette traverse est ainsi renforcée à ses extrémités latérales associée aux deux côtés de caisse 12 que comporte un véhicule. La moitié inférieure du flanc transversal arrière 47R est en regard de l'extrémité avant de la barre 20 de renfort de frise, pour le cas échéant y transmettre des efforts à absorption d'énergie en cas de violent choc de type frontal ou de type de trois-quarts face.

Le flanc supérieur 47S du tronçon arrière 47, le haut du poteau et le haut du flasque arrière 47Q se prolongent avec rétrécissement pour se raccorder au tronçon d'extrémité arrière 49 de renfort de montant de baie appartenant à l'élément de renfort 40. Ainsi, ce tronçon d'extrémité arrière 49 comprend au moins cinq faces principales ressortant des figures, d'autres faces non visibles pouvant exister en bordure de pare-brise en correspondance du montant de baie 16 qui est conformée classiquement. Les cinq faces principales incluent un bord supérieur 49S de bord de pare-brise, un rebord frontal 49T de haut de montant de baie, un rebord latéral 49L, un rebord arrière (non visible aux figures) et un bord inférieur 49N. Le rebord frontal 49T s'étend transversalement en étant longitudinalement incliné de bas en haut et d'avant en arrière en correspondance de la pente du bas du montant de baie 16. Le rebord latéral 49L est sensiblement vertical, en suivant la base dudit montant de baie. Le rebord arrière est sensiblement parallèle au rebord frontal 49T. Le bord inférieur 49N est sensiblement vertical.

Divers points de soudure 53 sont représentés pour schématiser certaines des zones ponctuelles de soudage de l'élément de renfort 40 au côté de caisse 12 qu'il renforce. A l'avant, les points de soudure 53 sont par exemple au moins entre des tronçons de pliage de la doublure d'aile avant 30, verticalement en regard de saillies d'ondulations entre les creux 43C et des créneaux 45R qui sont saillants. D'autres points de soudure non représentés sont par exemple à l'avant du poteau et sur ledit poteau du tronçon arrière 47 de renfort de pied. D'autres points de soudure 53 sont représentés en correspondance de la base du montant de baie.

Le fonctionnement de l'élément de renfort 40 ressort déjà en partie de la description qui précède et va maintenant être détaillé.

Le tronçon avant 43 est déformable, en se pliant par compression longitudinale. L'avant du tronçon médian 45 peut aussi de déformer de la même manière en cas de choc particulièrement violent. L'arrière du tronçon médian 45 est prévu pour ne pas de déformer, pour stabiliser la cellule habitable au niveau des pieds et des chevilles des occupants des sièges avant du véhicule, au niveau de l'arrière du passage de roue. Le poteau formé par le tronçon arrière 47 de renfort de pied ne se déforme pas non plus, car il aide à la stabilité dimensionnelle de l'avant de l'encadrement de porte.

De manière particulièrement avantageuse, le tronçon d'extrémité arrière 49 de renfort de montant de baie ne se déforme pas pour participer aussi à la stabilité dimensionnelle de l'avant de l'encadrement de porte, à la base du montant de baie 16. L'élément de renfort 40 est efficace sans alourdir la caisse du véhicule, en étant par exemple plus léger par rapport à la solution proposée dans le document FR2934233, par exemple en permettant de gagner deux kilogrammes.

Avantageusement, l'élément de renfort 40 absorbe de l'énergie ou s'oppose aux déformations dans la caisse, comme indiqué par des flèches à la figure 2. La flèche F1, à composante longitudinale et à composante verticale, correspond à l'absorption d'énergie par déformation, dans le tronçon avant 43 et l'avant du tronçon médian 45. Ces deux tronçons tendent à se déformer longitudinalement, comme il a déjà été expliqué. Ces deux tronçons tendent aussi à se déformer en remontant vers le haut, comme le symbolise la flèche F1. La flèche F2 correspond à la lutte contre la déformation en s'opposant aux efforts résultant de la déformation de l'avant du renfort 40 et de l'avant de la doublure d'aile 30 du côté de caisse 12. La flèche F3 correspond à la lutte contre la déformation en transmettant de l'énergie vers la barre 20 située dans la porte. La flèche F4 correspond à la lutte contre la déformation en évitant le pliage par remontée vers le haut du montant de baie. Ainsi, le montant de baie 16 conserve son orientation naturelle. En outre, des efforts sont transmis vers l'arrière du montant de baie 16 et vers brancard 17 qui résistent mieux que s'il y avait une déformation à la base avant du montant de baie.

Avantageusement, dans le mode de réalisation précédemment décrit en relation avec les figures, le tronçon avant déformable 43 constitue un nez aminci en hauteur au regard du tronçon médian 45 et du tronçon arrière 47 de renfort de pied. Ce nez aminci bénéficie à la déformation progressive de l'avant du côté de caisse en cas de choc frontal ou de choc trois quart face, et en particulier de la déformation de l'avant 30A de la doublure d'aile avant 30 absorbant de l'énergie préalablement à l'absorption éventuelle d'énergie au niveau de l'avant du tronçon médian, suivant la violence du choc.

Avantageusement, la rigidité de l'élément de renfort 40 est renforcée par le tronçon arrière 47 de renfort de pied ayant le poteau déterminant un élargissement latéral de l'élément de renfort 40 et le flasque arrière 47Q qui sont raccordé au bas du tronçon d'extrémité arrière 49 de renfort de montant de baie. Avantageusement, ce flasque arrière 47Q est décalé en hauteur par rapport à la limite inférieure de l'élément de renfort 40, ce flasque étant en outre situé au plus haut que la barre 20 de renfort de frise de la porte avant.

Avantageusement, l'encadrement de porte avant peut conservent sa géométrie en bas du montant de baie de pare-brise en cas de choc frontal ou de choc de trois-quarts face du véhicule, par effet combiné de la déformation avant du côté de caisse 12 pourvu de son renfort latéral 40 et de la rigidité arrière de ce renfort.

## Revendications

1. Elément de renfort latéral (40) de l'avant d'un côté de caisse (10) de véhicule automobile, destiné à être fixé latéralement à l'avant de la caisse et destiné à s'étendre selon la direction longitudinale (L) du véhicule depuis l'avant d'une doublure d'aile avant (30) de la caisse vers un pied avant (14) de la caisse, comprenant un tronçon avant (43) déformable au moins longitudinalement, un tronçon médian (45) prolongeant vers l'arrière le tronçon avant (43), un tronçon arrière (47) de renfort de pied qui prolonge vers l'arrière le tronçon médian et un tronçon d'extrémité arrière (49) de renfort de montant de baie qui s'étend incliné vers le haut et vers l'arrière à partir du haut dudit tronçon arrière (47), le tronçon avant et le tronçon médian étant conformés pour recouvrir latéralement la doublure d'aile avant appartenant au côté de caisse du véhicule en autorisant la déformation du tronçon avant par compression suite à un choc frontal du véhicule ou un choc de trois-quarts face, le tronçon arrière (47) de renfort de pied étant conformé pour recouvrir latéralement le pied avant de la caisse et le tronçon d'extrémité arrière (49) de renfort de montant de baie étant conformé pour recouvrir latéralement la base d'un montant de baie de pare-brise de la caisse, **caractérisé en ce que** le haut du tronçon arrière (47) comprend un flanc supérieur (47S) qui s'étend transversalement et comprend, en avant par rapport au tronçon d'extrémité arrière (49) de renfort de montant de baie, une extension transversale (47B) de renfort de traverse inférieure de baie de pare-brise.

2. Elément selon la revendication précédente, **caractérisé en ce que** le tronçon avant (43) est déformable verticalement, en plus d'être déformable longitudinalement.

3. Elément selon l'une quelconque des revendications précédentes, **caractérisé en ce que**, au tronçon médian (45) et au tronçon arrière (47) de renfort de pied, l'élément de renfort (40) a une limite inférieure qui est sensiblement horizontale, cette limite inférieure étant telle que le tronçon arrière (47) de renfort de pied soit adapté à être au moins en correspondance du tiers supérieur du pied avant (14) du côté de caisse (12).

4. Elément selon l'une quelconque des revendications précédentes, **caractérisé en ce que**, à sa moitié inférieure, le tronçon arrière (47) de renfort de pied a une zone de fixation de charnon fixe d'articulation de porte pour coopérer par fixation avec un charnon fixe de pivotement de porte latérale avant du véhicule.

5. Elément selon l'une quelconque des revendications précédentes, **caractérisé en ce que**, le tronçon arrière (47) de renfort de pied comprend un poteau latéral déterminant un élargissement latéral de l'élément de renfort (40), ce poteau étant prévu pour être en correspondance du haut du pied avant du côté de caisse (12).

6. Elément selon l'une quelconque des revendications précédentes, **caractérisé en ce que**, à sa moitié supérieure et à son extrémité arrière, le tronçon arrière (47) de renfort de pied comprend un flasque arrière (47Q) qui est raccordé au bas du tronçon d'extrémité arrière (49) de renfort de montant de baie, ce flasque arrière (47Q) étant prévu pour être en correspondance d'une feuillure longitudinale du pied avant du côté de caisse à la base du montant de baie.

7. Elément selon l'une quelconque des revendications précédentes, **caractérisé en ce que** l'avant du tronçon médian (45) est déformable longitudinalement.

8. Caisse de véhicule automobile comprenant :
- un côté de caisse (12) pourvu d'une doublure d'aile avant (30), pourvu d'un pied avant (14) dont une face arrière détermine l'avant d'un encadrement de porte latérale avant et pourvu d'un montant de baie de pare-brise raccordé au haut dudit pied,
- un élément de renfort avant (40) qui est fixé latéralement à l'avant du côté de caisse (12) et qui s'étend selon la direction longitudinale (L) du véhicule depuis l'avant de la doublure d'aile avant (30) vers le pied avant (14) de la caisse,
**caractérisée en ce que** l'élément de renfort avant (40) est conforme à l'une quelconque des revendications précédentes en ayant :
- son tronçon avant (43) et son tronçon médian (45) qui recouvrent latéralement la doublure d'aile avant (30) appartenant au côté de caisse (12) en autorisant la déformation du tronçon avant par compression suite à un choc frontal du véhicule ou un choc de trois-quarts face,
- son tronçon arrière (47) de renfort de pied qui recouvre latéralement le pied avant (14) de la caisse et
- son tronçon d'extrémité arrière (49) de renfort de montant de baie qui recouvre latéralement la base du montant (16) de baie de pare-brise.

9. Caisse selon la revendication précédente, **caractérisée en ce que** le tronçon d'extrémité arrière (49) de renfort de montant de baie recouvre la base du montant de baie (16) sur sensiblement un quart à un tiers de l'étendue de ce montant.

10. Caisse selon l'une quelconque des revendications 8 à 9, comprenant une porte latérale avant pourvue d'une barre (20) de renfort de frise, **caractérisée en ce que** le tronçon arrière (47) de renfort de pied l'arrière a une moitié inférieure d'un flanc transversal arrière (47R) qui est en regard d'une extrémité avant de la barre (20) de renfort de frise, pour le cas échéant y transmettre des efforts à absorption d'énergie en cas de choc frontal ou de choc de trois-quarts face.

11. Caisse selon l'une quelconque des revendications 8 à 10, comprenant une traverse inférieure de baie de pare-brise, cette caisse ayant son élément de renfort latéral (40) qui est conforme à la revendication 3, **caractérisée en ce que** l'extension transversale (47B) de renfort de traverse inférieure de baie de pare-brise est en correspondance d'une extrémité latérale la traverse inférieure de baie de pare-brise.

12. Véhicule automobile comportant une caisse déterminant un habitacle en étant pourvue de deux côtés de caisse (12) déterminant au moins des encadrements de porte latérale avant, des montants (16) de baie de pare-brise étant aussi dans les encadrements de porte, **caractérisé en ce que** la caisse est conforme à l'une quelconque des revendications 8 à 11 de manière à rigidifier les encadrements de porte avant pour qu'ils tendent à conserver leur géométrie en bas de montant (16) de baie de pare-brise en cas de choc frontal du véhicule ou de choc de trois-quarts face, la géométrie de l'habitacle tendant alors à être conservée lors de ce choc.

## Patentansprüche

1. Seitenverstärkungselement (40) der Frontpartie einer Verkleidungsseite (10) eines Kraftfahrzeugs, das dazu bestimmt ist, seitlich an der Frontseite der Verkleidung befestigt zu sein und dazu bestimmt ist, sich entlang der Längsrichtung (L) des Fahrzeugs von der Frontseite einer Vorderflügelauskleidung (30) der Verkleidung zu einem Vorderfuß (14) der Verkleidung zu erstrecken, das einen vorderen Abschnitt (43) umfasst, der mindestens längs verformbar ist, einen mittleren Abschnitt (45), der den vorderen Abschnitt (43) nach hinten verlängert, einen hinteren Verstärkungsabschnitt (47) des Fußes, der den mittleren Abschnitt nach hinten verlängert, und einen hinteren Endabschnitt (49) zur Verstärkung einer Öffnungsstrebe, die sich schräg nach oben und nach hinten ausgehend von der Oberseite des hinteren Abschnitts (47) erstreckt, wobei der vordere Abschnitt und der mittlere Abschnitt gestaltet sind, um seitlich die Vorderflügelauskleidung, die zu der Verkleidungsseite des Fahrzeugs gehört, abzudecken, indem das Verformen des vorderen Abschnitts durch Komprimieren im Anschluss an einen Frontalaufprall des Fahrzeugs oder einen Dreiviertelfrontalaufprall zu erlauben, wobei der hintere Verstärkungsabschnitt (47) des Fußes gestaltet ist, um den Vorderfuß der Verkleidung seitlich abzudecken, und der vordere Endabschnitt (49) zur Verstärkung der Öffnungsstrebe gestaltet ist, um die Basis einer Windschutzscheiben-Öffnungsstrebe der Verkleidung seitlich abzudecken, **dadurch gekennzeichnet, dass** die Oberseite des hinteren Verstärkungsabschnitt (47) des Fußes eine obere Flanke (47S) umfasst, die sich quer und nach vorn in Bezug auf den hinteren Endabschnitt (49) zur Verstärkung der Öffnungsstrebe erstreckt, eine Quererweiterung (47B) zur Verstärkung des unteren Querträgers der Windschutzscheibenöffnung umfasst.

2. Element nach dem vorhergehenden Anspruch, **dadurch gekennzeichnet, dass** der vordere Abschnitt (43) nicht nur längs sondern auch vertikal verformbar ist.

3. Element nach einem der vorhergehenden Ansprüche, **dadurch gekennzeichnet, dass** das Verstärkungselement (40) am mittleren Abschnitt (45) und am hinteren Verstärkungsabschnitt (47) des Fußes ein unteres Limit hat, das im Wesentlichen horizontal ist, wobei dieses untere Limit derart ist, dass der hintere Verstärkungsabschnitt (47) des Fußes angepasst ist, um mindestens dem oberen Drittel des Vorderfußes (14) der Verkleidungsseite (12) zu entsprechen.

4. Element nach einem der vorhergehenden Ansprüche, **dadurch gekennzeichnet, dass** der hintere Verstärkungsabschnitt (47) des Fußes an seiner unteren Hälfte eine Befestigungszone für stationäres Gelenkband zur Türanlenkung hat, um durch Befestigung mit einem stationären Schwenkband der vorderen Seitentür des Fahrzeugs zusammenzuwirken.

5. Element nach einem der vorhergehenden Ansprüche, **dadurch gekennzeichnet, dass** der hintere Verstärkungsabschnitt (47) des Fußes einen seitlichen Ständer umfasst, der eine seitliche Verbreiterung des Verstärkungselements (40) bestimmt, wobei dieser Ständer vorgesehen ist, um der Oberseite des Vorderfußes der Verkleidungsseite (12) zu entsprechen.

6. Element nach einem der vorhergehenden Ansprüche, **dadurch gekennzeichnet, dass** der hintere Verstärkungsabschnitt (47) des Fußes an seiner oberen Hälfte und seinem hinteren Ende einen hinteren Flansch (47Q) umfasst, der an der Unterseite des hinteren Endabschnitts (49) zur Verstärkung der Öffnungsstrebe angeschlossen ist, wobei dieser hintere Flansch (47Q) vorgesehen ist, um einem Längsfalz des Vorderfußes auf der Verkleidungsseite an der Basis der Öffnungsstrebe zu entsprechen.

7. Element nach einem der vorhergehenden Ansprüche, **dadurch gekennzeichnet, dass** die Vorderseite des mittleren Abschnitts (45) längs verformbar ist.

8. Kraftfahrzeugverkleidung, umfassend:
- eine Verkleidungsseite (12), die mit einer Vorderflügelauskleidung (30) versehen ist, der mit einem Vorderfuß (14) versehen ist, dessen Rückseite die Vorderseite einer vorderen Seitentüreinrahmung bestimmt und mit einer Windschutzscheiben-Öffnungsstrebe, die an die Oberseite des Fußes angeschlossen ist, versehen ist,
- ein vorderes Verstärkungselement (40), das seitlich an der Frontseite der Verkleidungsseite (12) befestigt ist und sich entlang der Längsrichtung (L) des Fahrzeugs von der Vorderseite der Vorderflügelauskleidung (30) zu dem Vorderfuß (14) der Verkleidung erstreckt,
**dadurch gekennzeichnet, dass** das vordere Verstärkungselement (40) einem der vorhergehenden Ansprüche entspricht, indem es Folgendes hat:
- seinen vorderen Abschnitt (43) und seinen mittleren Abschnitt (45), die seitlich die Vorderflügelauskleidung (30) abdecken, die zu der Verkleidungsseite (12) gehört, indem die Verformung des vorderen Abschnitts durch Komprimieren im Anschluss an einen Frontalaufprall des Fahrzeugs oder einen Dreiviertelfrontalaufprall erlaubt wird,
- seinen hinteren Verstärkungsabschnitt (47) des Fußes, der den Vorderfuß (14) der Verkleidung seitlich abdeckt, und
- seinen hinteren Endabschnitt (49) zum Verstärken der Öffnungsstrebe, der die Basis der Windschutzscheiben-Öffnungsstrebe (16) seitlich abdeckt.

9. Verkleidung nach dem vorhergehenden Anspruch, **dadurch gekennzeichnet, dass** der hintere Endabschnitt (49) zur Verstärkung der Öffnungsstrebe die Basis der Öffnungsstrebe (16) auf im Wesentlichen einem Viertel bis einem Drittel des Ausmaßes dieser Strebe abdeckt.

10. Verkleidung nach einem der Ansprüche 8 bis 9, die eine vordere Seitentür umfasst, die mit einer Friesverstärkungsstange (20) versehen ist, **dadurch gekennzeichnet, dass** der hintere Verstärkungsabschnitt (47) des Fußes eine untere Hälfte einer hinteren Querflanke (47R) hat, die einem vorderen Ende der Friesverstärkungsstange (20) gegenüber liegt, um gegebenenfalls darauf Energieabsorptionskräfte bei einem Frontalaufprall oder Dreiviertelfrontalaufpralls zu übertragen.

11. Verkleidung nach einem der Ansprüche 8 bis 10, die einen unteren Windschutzscheibenöffnungs-Querträger umfasst, wobei diese Verkleidung ihr seitliches Verstärkungselement (40), das Anspruch 3 entspricht, **dadurch gekennzeichnet** hat, dass die Quererweiterung (47B) der unteren Querträgerverstärkung der Windschutzscheibenöffnung einem seitlichen Ende des unteren Querträgers der Windschutzscheibenöffnung entspricht.

12. Kraftfahrzeug, das eine Verkleidung umfasst, die eine Fahrgastzelle bestimmt, indem sie mit zwei Verkleidungsseiten (12) versehen ist, die mindestens Rahmen für vordere Seitentür bestimmen, wobei die Streben (16) der Windschutzscheibenöffnung auch in den Rahmen sind, **dadurch gekennzeichnet, dass** die Verkleidung einem der Ansprüche 8 bis 11 derart entspricht, dass sie die vorderen Rahmen versteift, damit sie dazu tendieren, ihre Geometrie unten an der Strebe (16) der Windschutzscheibenöffnung in dem Fall eines Frontalaufpralls oder Dreiviertelfrontalaufpralls zu behalten, wobei die Geometrie der Fahrgastzelle dazu tendiert, bei diesem Aufprall beibehalten zu werden.

## Claims

1. A side reinforcing element (40) for the front of a side of the shell (10) of a motor vehicle, intended to be fixed laterally to the front of the shell and intended to extend along the longitudinal direction (L) of the vehicle from the front of a front fender liner (30) of the shell to a front pillar (14) of the shell, including a front section (43) which is deformable at least longitudinally, a median section (45) extending toward the rear, the front section (43), a rear section (47) for reinforcing the pillar which extends toward the rear, the median section and a rear end section (49) for reinforcing the window pillar which extends tilted upward and toward the rear from the top of said rear section (47), the front section and the median section being shaped to cover laterally the front fender liner belonging to the shell side of the vehicle enabling the front section to deform by compression resulting from a frontal impact of the vehicle or a three-quarters frontal impact, the rear section (47) for reinforcing the pillar being shaped to laterally cover the front pillar of the shell and the rear end section (49) for reinforcing the window pillar being shaped to cover laterally the base of a windscreen window pillar of the shell, **characterized in that** the top of the rear section (47) includes an upper side (47S) which extends transversely and includes, at the front with respect to the rear end section (49) for reinforcing the window pillar, a transverse extension (47B) for reinforcing the lower cross-member of the windscreen window.

2. The element according to the preceding claim, **characterized in that** the front section (43) is deformable vertically, in addition to being deformable longitudinally.

3. The element according to any one of the preceding claims, **characterized in that**, at the median section (45) and at the rear section (47) for reinforcing the pillar, the reinforcing element (40) has a lower limit which is substantially horizontal, this lower limit being such that the rear section (47) for reinforcing the pillar is adapted to be at least in correspondence with the upper third of the front pillar (14) of the shell side (12).

4. The element according to any one of the preceding claims, **characterized in that**, at its lower half, the rear section (47) for reinforcing the pillar has a fixing zone of fixed knuckle of a door hinge to cooperate by fixing with a fixed knuckle for pivoting of a front side door of the vehicle.

5. The element according to any one of the preceding claims, **characterized in that** the rear section (47) for reinforcing the pillar includes a lateral column determining a lateral widening of the reinforcing element (40), this column being provided to be in correspondence with the top of the front pillar of the shell side (12).

6. The element according to any one of the preceding claims, **characterized in that**, at its upper half and at its rear end, the rear section (47) for reinforcing the pillar includes a rear flange (47Q) which is connected to the bottom of the rear end section (49) for reinforcing the window pillar, this rear flange (47Q) being provided to be in correspondence with a longitudinal rebate of the front pillar of the shell side at the base of the window pillar.

7. The element according to any one of the preceding claims, **characterized in that** the front of the median section (45) is deformable longitudinally.

8. A motor vehicle shell including:
- a shell side (12) provided with a front fender liner (30), provided with a front pillar (14), a rear face of which determines the front of a front side door frame and provided with a windscreen window pillar connected to the top of said pillar,
- a front reinforcing element (40) which is fixed laterally to the front of the shell side (12) and which extends along the longitudinal direction (L) of the vehicle from the front of the front fender liner (30) toward the front pillar (14) of the shell,
**characterized in that** the front reinforcing element (40) is in accordance with any one of the preceding claims, having:
- its front section (43) and its median section (45) which cover laterally the front fender liner (30) belonging to the shell side (12) permitting the deformation of the front section by compression as a result of a frontal impact of the vehicle or a three-quarters frontal impact,
- its rear section (47) for pillar reinforcement which covers laterally the front pillar (14) of the shell and
- its rear end section (49) for window pillar reinforcement which covers laterally the base of the windscreen window pillar (16).

9. The shell according to the preceding claim, **characterized in that** the rear end section (49) for reinforcing the window pillar covers the base of the window pillar (16) over substantially a quarter to a third of the extent of this pillar.

10. The shell according to any one of claims 8 to 9, including a front side door provided with a beltline reinforcement bar (20), **characterized in that** the rear section (47) for reinforcing the rear pillar has a lower half of a transverse rear flank (47R) which faces a front end of the beltline reinforcement bar (20), for transmitting there, if necessary, energy absorption forces in the case of a frontal impact or a three-quarters frontal impact.

11. The shell according to any one of claims 8 to 10, including a lower windscreen window cross-member, this shell having its side reinforcement element (40), which is in accordance with claim 3, **characterized in that** the transverse extension (47B) for reinforcing the lower windscreen window cross-member is in correspondence with a lateral end of the lower windscreen window cross-member.

12. A motor vehicle comprising a shell determining a passenger compartment, being provided with two shell sides (12) determining at least front side door frames, windscreen window columns (16) also being in the door frames, **characterized in that** the shell is in accordance with any one of claims 8 to 11 so as to stiffen the front door frames so that they tend to retain their geometry at the bottom of the windscreen window column (16) in the case of a frontal impact of the vehicle or of a three-quarters frontal impact, the geometry of the passenger compartment therefore tending to be retained during this impact.
